## Europäisches Patentamt
## European Patent Office
## Office européen des brevets

(19)

(11) Veröffentlichungsnummer: **0 123 183**
**B1**

(12) # EUROPÄISCHE PATENTSCHRIFT

(45) Veröffentlichungstag der Patentschrift:
25.11.87

(51) Int. Cl.⁴: **B 21 D 43/11**, B 23 Q 7/00,
B 23 D 27/00, B 23 K 37/04

(21) Anmeldenummer: **84103826.8**

(22) Anmeldetag: **06.04.84**

(54) **Bearbeitungsmaschine für flache Werkstücke.**

(30) Priorität: **23.04.83 DE 3314748**

(43) Veröffentlichungstag der Anmeldung:
**31.10.84 Patentblatt 84/44**

(45) Bekanntmachung des Hinweises auf die Patenterteilung:
**25.11.87 Patentblatt 87/48**

(84) Benannte Vertragsstaaten:
**CH FR GB IT LI**

(56) Entgegenhaltungen:
**DE-A-2 848 282**
**DE-B-2 536 524**
**US-A-4 063 059**

(73) Patentinhaber: **Trumpf GmbH & Co, Postfach 1320**
**Johann- Maus- Strasse 2, D-7257 Ditzingen (DE)**

(72) Erfinder: **Klingel, Hans, Teckstrasse 91, D-7141**
**Möglingen (DE)**

(74) Vertreter: **Schmid, Berthold, Patentanwälte Dipl.-**
**Ing. B. Schmid Dr. Ing. G. Birn Dipl.- Phys. H.**
**Quarder Falbenhennenstrasse 17, D-7000**
**Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Bearbeitungsmaschine für flache Werkstücke mit einer Bearbeitungsstation und einer bezüglich deren Bearbeitungswekzeug geradlinig (z. B. in X-Richtung) mittels einer ersten Vorschubvorrichtung (11, 12, 13) bewegbaren sowie betätigbaren ersten Werkstück-Haltevorrichtung (34) und mit einer zusätzlichen, wenigstens alternativ zur ersten mittels einer zusätzlichen Vorschubvorrichtung (7, 4, 8) in gleicher Richtung bewegbaren sowie betätigbaren Werkstück-Haltevorrichtung (35). Eine derartige Bearbetungsmaschine ist beispielsweise durch die DE-A-28 48 282 bekannt geworden. Genauer gesagt handelt es sich dort um eine Stanzmaschine, mit deren Hilfe Bleche gelocht werden, die man nachfolgend zu Waschmaschinentrommeln verarbeitet. Ein dem abgewickelten Trommelmantel entsprechendes Blech wird mit Hilfe der ersten Vorschubvorrichtung und ihrer zugeordneten ersten Werkstück-Haltevorrichtung in den Bereich des Stanzwerkzeugs gebracht. Daraufhin wird es von der zusätzlichen Haltevorrichtung übernommen, worauf die erste Haltevorrichtung gelöst wird. Während des Stanzens wird also das Werkstück nur von der zusätzlichen Haltevorrichtung gehalten. Diese besitzt zwei im Abstand voneinander angeordnete, über eine Querstrebe miteinander verbundene Spannpratzen. Die eine ist dem vorderen und die andere dem hinteren Werkstück-bzw. Blechende zugeordnet. Nach dem Stanzen sämtlicher Lochreinen wird das Werkstück mit Hilfe der ersten Haltevorrichtung und ihrer Vorschubvorrichtung aus der Maschine hinausbefördert. Nach der Rückführung aller Vorrichtungen beginnt ein neuer Arbeitszyklus.

Das Werkstück wird bei dieser Bearbeitungsmaschine, wie gesagt, während des Transports und während der Bearbeitung immer nur von einer der beiden Haltevorrichtungen gehalten. Lediglich beim Stillstand der Maschine sind kurzzeitig beide Haltevorrichtungen geschlossen. Die während der Bearbeitung auftretenden mitunter recht hohen Kräfte werden damnach nur von einer einzigen Haltevorrichtung, nämlich der zusätzlichen Haltevorrichtung aufgenommen. Beim Stanzen und Nibbeln muß das Werkstück zwischen zwei Stanzhüben stark beschleunigt und wieder abgebremst werden. Dabei treten hohe Belastungen an der Haltevorrichtung auf.

Bei der vorbekannten Maschine wird es nun als nachteilig angesehen, daß die erste Haltevorrichtung während des Stanzens inaktiv ist und somit nicht zum Aufnehmen der hohen Belastungen beiträgt. Andererseits erfordert dies eine besonders hohe Haltekraft der zusätzlichen Haltevorrichtung. Diese könnte wesentliche geringer gehalten werden, wenn beim Stanzen beide Haltevorrichtungen das Werkstück halten würden.

Die Pratzen der zusätzlichen Haltevorrichtung halten das Werkstück am in Verschieberichtung vorderen und hinteren Ende fest. Weil während des Bearbeitens keine dieser Pratzen gelöst werden kann, ist eine Bearbeitung im Bereich dieser Pratzen nicht möglich. Würde man die Pratze an einem Ende öffnen, so wäre ein Drehen des Werkstücks um die Pratze am anderen Ende nahezu unvermeidlich. Insgesamt ist man hinsichtlich der Ausbildung der Werkstücke erheblich eingeschränkt.

Abgesehen hiervon ist man natürlich hinsichtlich der Bearbeitung von Werkstücken schon allein dadurch sehr beschränkt, daß das Werkstück nur einer Richtung bewegbar ist.

Die vorbekannte Bearbeitungsmaschine ist wie gesagt eine Stanzmaschine. Flache Werkstücke, insbesondere Bleche, werden jedoch nicht nur gestanzt oder genibbelt, vielmehr werden sie auf ähnlichen Bearbeitungsmaschinen thermisch bearbeitet, beispielsweise im Plasma- oder Laserschneidverfahren, gefräst oder mit anderen bekannten Werkzeugen bearbeitet, wobei der Begriff "Werkzeug" hier im weitesten Sinne zu verstehen ist und beispielsweise auch eine Brenndüse od. dgl. umfaßt.

Bei all den genannten Verfahren ist eine Verschiebung des Werkstücks in lediglich einer Richtung in aller Regel nicht ausreichend. Um schrägverlaufende, bogenförmige oder kreisförmige Konturen zu bearbeiten oder zu erstellen, ist ein Werkstückvorschub in zwei zueinander senkrechten Richtungen notwendig, wobei die Verschiebebewegungen in bekannter Weise einander überlagert werden können. Außerdem ist eine Bearbeitungsmaschine von geringerer Bedeutung, wenn sie das Bearbeiten gewisser Zonen des Werstücks wegen der Werkstückhaltevorrichtungen nicht gestattet. Schließlich ist es insbesondere bei der Bearbeitung schwerer und großer Werkstücke unerläßlich, daß die Maschine die notwendige Stabilität und Schwingungssteifigkeit besitzt.

Die Aufgabe der Erfindung besteht infolgedessen darin, die Bearbeitungsmaschine der eingangs beschriebenen Art so weiterzubilden, daß die beim Beschleunigungen und Verzögern des Werkstücks auftretende Belastung der Werkstück-Haltevorrichtungeen reduziert, die Bearbeitung in allen Randbereichen ermöglicht und eine universellere Werstückbearbeitung möglich ist.

Zur Lösung dieser Aufgabe wird erfindungsgemäß vorgeschlagen, daß die Bearbeitungsmaschine gemäß dem Oberbegriff des Anspruchs 1 entsprechend dem kennzeichnenden Teil dieses Anspruchs ausgebildet ist. Da die beiden gegenüberliegenden Werkstückrändern zuordnenbaren Werkstück-Halte- und -Vorschubvorrichtungen sowohl einzeln als auch gemeinsam innerhalb einer gemeinsamen X-Y-Ebene bewegbar und auch jeder Seite separat oder gemeinsam betätigbar, d.h. öffnen- und schließbar sind, kann man ein auf dieser Bearbeitungsmaschine zu bearbeitendes Werkstück entweder nur mit der einen oder der anderen Werkstück-Halte- und -Vorschubeinrichtung gegenüber dem Bearbeitungswerkzeug bewegen oder aber die Verschiebung mit Hilfe beider Werkstück-Halte- und -Vorschubvorrichtungen vorhehmen. Letzteres ist insbesondere bei großen und schweren Werkstücken angezeigt. Aufgrund der gemeinsamen Steuervorrichtungen bereitet ein Wechsel von der einen auf die andere Werkstück-Halte- und -Vorschubvorrichtung oder von einer auf zwei bzw. umgekehrt keine Schwierigkeiten. Infolgedessen kann man ein Werkstück problemlos bis an sämtliche Ränder bearbeiten. Wenn die Bearbeitung im Bereich der einen Werkstück-Halte- und -Vorschubvorrichtung erfolgen soll, so nimmt man diese zumindest kurzzeitig ab oder setzt die überhaupt nicht an. Sobald diese Stelle bearbeitet ist und einem Ansetzen der Werkstück-Halte- und -Vorschubvorrichtung an dieser Stelle nichts entgegensteht, kann man das Werkstück dort wieder oder erstmal auch festhalten. Dadurch ist man ggf. die Bearbeitung an der gegenüberliegenden Seite im Bereich der jeweils anderen Werkstück-Halte- und -Vorschubvorrichtung ohne weiteres möglich.

Wenn man das Werkstück an gegenüberliegenden Randbereichen gleichzeitig festhält, so muß jede Vorrichtung nur die halbe maximal erforderliche Klemmkraft aufbringen, weswegen man sie in dieser Richtung vergleichsweise klein dimensionieren bzw. die erforderliche Klemmleistung entsprechend geringerer auslegen kann. Außerdem ist es möglich, den seitlichen Abstand der beiden Werkstück-Halte- und -Vorschubvorrichtungen zu verändern, so daß Werkstücke unterschiedlicher Größe festgehalten werden können

Schließlich ermöglicht die Verschiebung des Werkstücks in X- und/oder Y-Richtung eine vielfältige Bearbeitung. Beim gleichzeitigen Festhalten des Werkstücks mit beiden Werkstück-Halte- und - Vorschubvorrichtungen liegt der Schwerpunkt des aus einer Blechplatte bestehenden Werkstücks zwischen diesen beiden Vorrichtungen. Ein Überschwingen beim Beschleunigen und Abbremsen des Werkstücks, beispielsweise zwischen zwei Stanz- oder Nibbelhüben, entfällt hierdurch oder wird zumindest erheblich gedämpft. Auch die Gefahr des Herausreißens aus einer der beiden Vorrichtungen ist erheblich reduziert.

Die beiden Werkstück-Halte- und -Vorschubvorrichtungen können, wie gesagt, gleichsinnig bewegt werden. Es muß dann, insbesondere bei automatisch gesteuerter Vorschubbewegung, innerhalb einer X-Y-Ebene dafür gesorgt werden, daß beide Vorrichtungen entsprechende Kommandos erhalten, damit sie einerseits synchron bewegt werden und andererseits keine die Bewegungen der anderen hindert, wenn beide an ein und demselben Werkstück angreifen.

Es ist leicht einzusehen, daß man mit einer derartigen Bearbeitungsmaschine beispielsweise auch zwei innerhalb derselben Ebene befindliche, nebeneinander angeordnete Werkstücke bearbeiten kann. Bei lediglich einer einzigen Bearbeitungsstation erfolgt die Bearbeitung selbstverständlich nacheinander. Anderseits sind aber Wechselseitige Bearbeitungsvoränge an beiden Werkstücken möglich, jedoch nicht unbedingt zweckmäßig.

Schließlich besteht noch die Möglichkeit, ein Werkstück mit Hilfe des oder eines Bearbeitungswerkzeugs als einzigen oder letzten Arbeitsvorgang in zwei Teile zu teilen und mit jeder der beiden Werstück- Halte- und -Vorschubvorrichtungen eines der beiden entstandenen Teilstücke festzuhalten.

Bei einer besonders bevorzugten Ausführungsform einer derartigen Bearbeitungsmaschine ist die gemeinsame Steuerung programmierbar. Beim Bearbeiten kleiner Werkstücke kann man beispielsweise lediglich eine der beiden Werkstück-Halte- und -Vorschubvorrichtungen benutzen und dies gilt auch dann, wenn man eine der beiden Vorrichtungen an einem Werkstück deshalb nicht ansetzen kann, weil die Bearbeitung überall dort vorgenommen werden soll, wo die zweite Vorrichtung angesetzt werden müßte. In diesem Falle wäre es dann unvorteilhaft, wenn man die nicht benutzte Haltevorrichtung "leer" mitlaufen lassen würde. Vielmehr ist es zweckmäßig, wenn man die Steuerung lediglich auf die benutzte bzw. momentan benutzte Werkstück-Halte- und -Vorschubvorrichtung einwirken läßt.

Wenn beide Haltevorrichtungen unabhängig voneinander durch die Steuerung bewegt, also verschoben werden, so müssen die Bewegungen derart erfolgen, daß kein Werkstück das andere behindert oder gar blockiert. Der bevorzugte Fall ist allerdings der, bei welcher die vorzugsweise programmierbare gemeinsame Steuerung auf beide Werkstück-Halte- und -Vorschubvorrichtungen derart einwirkt, daß letztere ein einziges Werkstück gemeinsam festhalten und zum Zwecke der Bearbeitung verschieben.

Wenn die Werkstück-Halte- und -Verschiebevorrichtungen an ein und demselben Werkstück angreifen bzw. dieses halten und verschieben, so muß bei einer programmgesteuerten Werkstückverschiebung berücksichtigt werden, daß entweder der Koordinatennullpunkt der beiden Vorrichtungen um einen festen Wert, beispielsweise in X-Richtung, auseinanderliegt oder bei gemeinsamen Koordinatennullpunkt beider Vorrichtungen die Ausgangsstellung der einen Vorrichtung, beispielsweise im Koordinatennullpunkt, liegt, während diejenige des anderen auf der X- oder Y-Achse um einen festen Wert verschoben ist, der bei der Programmierung berücksichtigt werden muß. Im übrigen können die Haltevorrichtungen in der bei Stanz-, Nibbel- oder Brennschneidmaschinen bekannten Weise ausgebildet und mit Antrieben versehen sein.

Eine weitere Ausgestaltung der Erfindung kennzeichnet sich dadurch, daß die beiden Werkstück-Haltevorrichtungen einander mit Abstand gegenüberliegen, wobei Halteorgane der ersten Werkstück-Haltevorrichtung in etwa entgegengesetzte Richtungen weisen wie Halteorgane der zusätzlichen Werkstück-Haltevorrichtung. Somit eignen sich diese Haltevorrichtungen besonders gut zum Festhalten von Blechtafeln oder anderen Werkstücken mit parallelen Werkstückrändern. Die Halteorgane können beispielsweise Klemmbacken od. dgl. aufweisen bzw. als Spannpratzen ausgebildet sein, die man ebenfalls über die Maschinensteuerung öffnen oder schließen kann, wobei man im Falle einer Programmsteuerung auch die des Öffnen und Schließens mit in das Programm einbeziehen kann. Dies gilt vor allen Dingen dann, wenn man während der Bearbeitung das eine oder andere Halteorgan umsetzen muß, weil eine Bearbeitung an der Stelle erfolgen soll, an der dieses Halteorgan zuvor angesetzt war. Auch hier wirkt sich die Verwendung zweier Haltevorrichtungen mit getrennt steuerbaren Halteorganen besonders günstig aus, weil sich jede Haltevorrichtung bzw. jedes ihrer Halteorgane unabhängig von einem anderen umsetzen läßt, wenn es für die weitere Bearbeitung im Wege ist. All dies geschieht im Grunde genommen bei ständigem Festhalten des Werkstücks durch das oder die übrigen Haltorgane, weswegen bei diesem Umsetzen keine Verschiebung des Werkstücks gegenüber dem oder den Bearbeitungswerkzeugen erfolgt. Man vermeidet dadurch Ungenauigkeiten in der Bearbeitung, die beim Umsetzen der bekannten Bearbeitungsmaschinen mit lediglich einer einzigen Haltevorrichtung kaum zu umgehen sind. Deshalb ist der Seitenabstand der Halteorgane jeder Haltevorrichtung in weiterer Ausgestaltung der Erfindung separat einstellbar.

Eine andere Ausbildung der Erfindung sieht vor, daß die beiden Haltevorrichtungen mechanisch miteinander verbunden sind und sie sich insbesondere mit Abstand gegenüberliegen. Im Falle einer gesteuerten Bewegung der Haltevorrichtung reicht hier eine einzige Steuervorrichtung aus, die auf eine der Haltevorrichtungen einwirkt, während die andere jeweils über die mechanische Verbindung mitgenommen wird. Der gegenseitige Abstand entspricht beispielsweise der maximal zu bearbeitenden Werkstückbreite oder -länge.

In besonders vorteilhafter Weise besitzt die Bearbeitungsmaschine zwei voneinander entfernte Bearbeitungsstationen für das Werkstück. Hierbei kann es sich sowohl um gleiche, als auch verschiedene Bearbeitungsstationen handeln. Wenn die Bearbeitungsstationen verschieden sind, so muß im Falle einer programmgesteuerten Verschiebung des Werkstücks beim Übergang von einer Bearbeitungsstation zur nächsten deren Seitenabstand im Programm berücksichtigt werden. Falls eine bestimmte Stelle zunächst beispielsweise genibbelt und später auf einer zweiten Bearbeitungsstation mittels eines Fräsers nachbearbeitet wird, so muß die Verschiebung des Werkstücks um einen Betrag erfolgen, welcher dem Abstand der beiden Werkzeugachsen zusätzlich dem beim Fräsen abzutragenden Rand entspricht. Beim Übergang von einer Bearbeitungsstation zur nächsten und gleichzeitigen Bearbeitung an anderer Stelle des Werkstücks, kann die Verschiebebewegung des letzteren sowohl größer als auch kleiner sein als der Seitenabstand der Achsen der Bearbeitungswerkzeuge der beiden Bearbeitungsstationen.

Bei einer bevorzugten Ausführungsform der Erfindung liegen die beiden Bearbeitungsstationen mit festem Abstand in gleicher Richtung auseinander, wie die beiden Haltevorrichtungen. Die zu bearbeitende Breite richtet sich nach der "Rachentiefe", dem Abstand von der Bearbeitungsstation bis zur Verbindung von dem Ausleger zum Untergestell. Haben die beiden Bearbeitungsstationen einen festen Abstand von etwa dieser Rachentiefe, so lassen sich Werkstücke bearbeiten, die doppelt so breit sind wie die Rachentiefe.

Eine weitere bevorzugte Variante der Erfindung kennzeichnet sich dadurch, daß sich die beiden Bearbeitungsstationen wenigstens zum Teil an gegeneinanderweisenden Maschinenauslegern befinden. Beispielsweise bei einer Stanz- oder Nibbelmaschine mit einem zumindest zweiteiligen Bearbeitungswerkzeug befindet sich der eine Teil des Werkzeugs, insbesondere der Stempel, in eine Werkzeugaufnahme des Auslegers, während der oder die anderen Teile dieses Werkzeugs in eine Werkzeugaufnahme eines Untergestells eingesetzt sind. Im Falle von zwei gegeneinanderweisenden Maschinen-Auslegern kann diese Bearbeitungsmaschine beispielsweise von einem gemeinsamen Untergestell ausgehend zwei gegeneinanderweisende, evtl. auch miteinander verbundene Ausleger besitzen, wobei dann im Untergestell die beiden unteren Werkzeugteile sind und in jedem der beiden oder dem gemeinsamen Ausleger das dazugehörige obere Werkzeugteil eingesetzt wird. Es ist allerdings nicht unbedingt notwendig, daß diese Maschine ein gemeinsames Untergestell aufweist. Gegebenenfalls kann es vorteilhaft sein, wenn die beiden Teilmaschinen je ein eigenes Teil-Untergestell mit zugehörigem Ausleger aufweisen, jedoch sind auch in diesem Falle beide Teilmaschinen durch ein und dieselbe Steuerung betätigbar. Dies schließt allerdings nicht aus, daß diese Steuerung eine gewissermaßen aus zwei Teilsteuerungen bestehende Gesamtsteuerung ist und man im Bedarfsfalle auch jede der Teilsteuerungen einzeln in Verbindung mit Ihrer Teilmaschine einsetzen kann.

Gemäß einer anderen Variante der Erfindung ist vorgesehen, daß sich die zweite Bearbeitungsstation wenigstens zum Teil an einer Verlängerung eines maschinen-Auslegerarms befindet. In diesem Falle besitzt die Bearbeitungsmaschine zweckmäßigerweise nur ein gemeinsames einteiliges Untergestell und ihr Maschinen-Ausleger ist in Abweichung von den herkömmlichen Bearbeitungsmaschinen dieser Art mit einer Auslegerarmverlängerung ausgestattet, an der sich das zweite Werkzeug bzw. im Falle eines mehrteiligen Werkzeugs das obere Werkzeugteil, also beispielsweise der Stempel der zweiten Bearbeitungswerkzeugs, befindet.

Die Erfindung wird nachstehend anhand von Ausführungsbeispielen näher erläutert. Die Zeichnung zeigt diese Ausführungsbeispiele.

Hierbei stellen dar:

Fig. 1 Perspektivisch eine erste Variante in schematisierter Darstellung,

Fig. 2 ebenfalls schematisch, eine Seitenansicht einer zweiten Ausführungsform.

In beiden Figuren sind Details, welche für die Erläuterung der Erfindung unwesentlich sind, weggelassen oder nur stilisiert gezeigt. Außerdem sind die gezeigten Einzelheiten der besseren Übersicht wegen teilweise vergrößert und im wesentlichen auch vereinfacht gezeichnet.

Am Ständer 1 der Bearbeitungsmaschine, beispelsweise einer Stanz- oder Nibbelmaschne mit zwei Arbeitsstationen, ist seitlich eine Schiene 3 mit einer Zahnstange 4 befestigt. An dieser Schiene 3 ist eine Trägerführung 5 im Sinne des Doppelpfeils 6 hin und her verschiebbar. Man erreicht dies mit Hilfe eines Elektromotors 7, dessen Antriebswelle ein Ritzel 8 trägt. Die Zähne des letzteren kämmen mit denjenigen der Zahnstange 4. An der Trägerführung 5 ist ein Werkstückträger 9 in Richtung des Doppelpfeils 10 längsverschiebbar gelagert, der mit Hilfe eines zweiten Elektromotors 11 antreibbar ist. Das Ritzel 12 dieses zweiten Elektromotors 11 greift in die Zähne einer zweiten, mit dem Werkstückträger 9 verbundenen Zahnstange 13 ein. Die Bewegungsrichtung des Werkstückträgers 9 ist genau senkrecht zur derjenigen der Trägerführung 5.

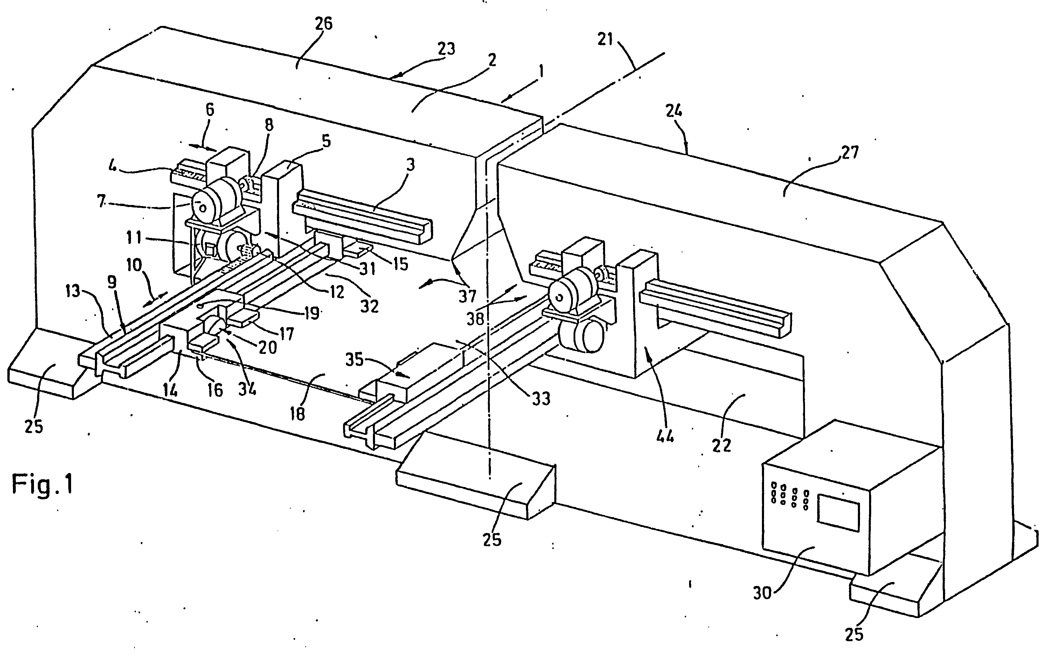

Am Werkstückträger 9 sind beim Ausführungsbeispiel der Fig. 1 zwei Halteorgane 14 und 15 im Sinne des Doppelpfeils 10 längsverschiebbar gelagert und in beliebiger Verschiebestellung festsetzbar. Jedes Halteorgan kann zwei in Längsrichtung des Werkstückträgers 9 versetzte Spannpratzen 16 und 17 od. dgl. aufweisen. Das Werkstück 18, beispielsweise eine Blechtafel, wird demnach mit seinem diesen Halteorganen 14 und 15 zugeordneten Längsrand an zwei seitlich nebeneinanderliegenden Stellen festgehalten, so daß man bei Verwendung oder Vorhandensein von lediglich einem derartigen Halteorgan das Werkstück an dieser Stelle verdrehsicher halten kann. Des weiteren kann jedes Halteorgan 14, 15 eine, beispielsweise aus einer Bohrung bestehende Rastaufnahme 19 und eine Festhalteeinrichtung 20 aufweisen, mit deren Hilfe das betreffende Halteorgan in jeder beliebigen Verschiebelage am Werkstückträger festgesetzt und bei Bedarf wieder freigegeben werden kann.

Die Bearbeitungsmaschine 1 ist im wesentlichen zu einer durch die strichpunktierte Linie 21 angedeuteten Ebene symmetrisch. Infolgedessen ist auch ein gemeinsames Untergestellt 22 vorhanden, welches lediglich schematisch angedeutet ist. Es kann allerdings im Bereich der Symmetrieebene 21 in nicht gezeigter Weise geteilt sein, so daß zwei Teilmaschinen 23 und 24 entstehen, die, sofern dies für zweckmäßig gehalten wird, miteinander verbunden sein können. Dies kann mit Hilfe von geeigneten Verbindungsflanschen, -laschen od. dgl. erfolgen. Andererseits ist aber eine sichere gegenseitige Zuordnung der Teilmaschinen 23 und 24 dadurch möglich, daß jede zumindest vier Befestigungsfüße 25 besitzt, mit denen sie im Bedarfsfalle am Boden verankert werden können. Jede Teilmaschine hat in bekannter Weise ein etwa C-förmiges Gestell, wobei der obere C-Schenkel einen Ausleger 26 bzw. 27 bildet. Dort ist eine obere Werkzeugaufnahme 28 und in nicht dargestellter Weise ein Exzenterantrieb od. dgl., sofern es sich um eine Stanz- oder Nibbelmaschine handelt. Dieser entfällt selbstverständlich im Falle einer Brennschneidmaschine bzw. wird dort durch eine Brennvorrichtung ersetzt. In der oberen Werkzeugaufnahme kann man beispielsweise einen Nibbel- oder Stanzstempel auswechselbar einsetzen. Dementsprechend nimmt dann die untere Werkzeugaufnahme 29 eine zugehörige Matrize und gegebenenfalls auch noch einen Abstreifer auf. Es ist durchaus möglich, an den beiden Teilmaschinen unterschiedliche Werkzeugaufnahmen vorzusehen, so daß beispielsweise die eine Teilmaschine als Stanz- oder Nibbelmaschine dient, während die andere Teilmaschine eine Plasma- oder Laser-Brennmaschine ist. Auch alle anderen Kombinationen sind denkbar, beispielsweise die Ausbildung einer Teilmaschine als Fräsmaschine. Im übrigen schließt der Aufbau dieser Bearbeitungsmaschine aus zwei Teil-Bearbeitungsmaschinen nicht aus, daß zumindest eine der letzteren zwei nebeneinander oder hintereinander angeordnete Werkzeugaufnahmen oder allgemeiner ausgedrückt Bearbeitungsstationen aufweist. Im Falle einer Programmsteuerung muß dann beim Übergang von einer Bearbeitungsstation zu anderen im Programm der Seitenabstand oder der Längsabstand dieser beiden Bearbeitungsstationen entsprechend berücksichtigt werden. Eine Programmsteuerung ist in der rechten Teilmaschine 24 symbolisch angedeutet und mit der Bezugszahl 30 versehen. Zweckmäßigerweise werden mit ihrer Hilfe alle steuerbaren Vorgänge beider Teilmaschinen gesteuert, d.h. diese Bearbeitungsmaschine besitzt trotz ihres Doppelmaschinencharakters lediglich eine einzige Programmsteuerung. Auch die Teilmaschine 24 verfügt über eine Werkstückkoordinatenführung 44, die derjenigen 31 der Teilmaschine 23 entspricht. Demnach kann man also das Werkstück 18 bei dieser Bearbeitungsmaschine 1 gleichzeitig an seinem linken Randbereich 32 und an seinem rechten Randbereich 33 festhalten. Die Werkstückhaltevorrichtung für den linken Randbereich 32 besteht im wesentlichen aus den Halteorganen 14 und 15 mit ihren Spannpratzen 16 und 17 und sie ist mit 34 bezeichnet. Dementsprechend ist eine zusätzliche Werkstück-Haltevorrichtung 35 an der Teilmaschine 24 vorgesehen und dort lediglich schematisiert eingezeichnet. Wie bereits erläutert, sind die Haltevorrichtungen 34 und 35 selbständig und gleichsinnig bewegbar um das Werkstück 18 in bestimmter Weise längs und quer oder schräg zu bewegen, und sie sind jeweils auch für sich allein zu betätigen, also anzuklemmen oder zu lösen. Dies erfolgt in bevorzugter Weise mit Hilfe der Maschinensteuerung, insbesondere einer Programmsteuerung der Maschine.

In nicht gezeigter Weise können die beiden Werkstück-Haltevorrichtungen 34 und 35 mechanisch miteinander gekuppelt werden. In diesem Falle reicht es aus, wenn man beispielsweise nur die Werksstück-Haltevorrichtung 34 steuert. Die andere wird dann über die mechanische Verbindung gleichsinnig mitgenommen. Das Ansetzen und gegebenenfalls gegenseitige Verschieben - im Falle zweier Halteorgane 14, 15 - wird zweckmäßigerweise für die beiden Teilmaschinen nicht mechanisch gekuppelt, sondern für jede Teilmaschine separat vorgenommen.

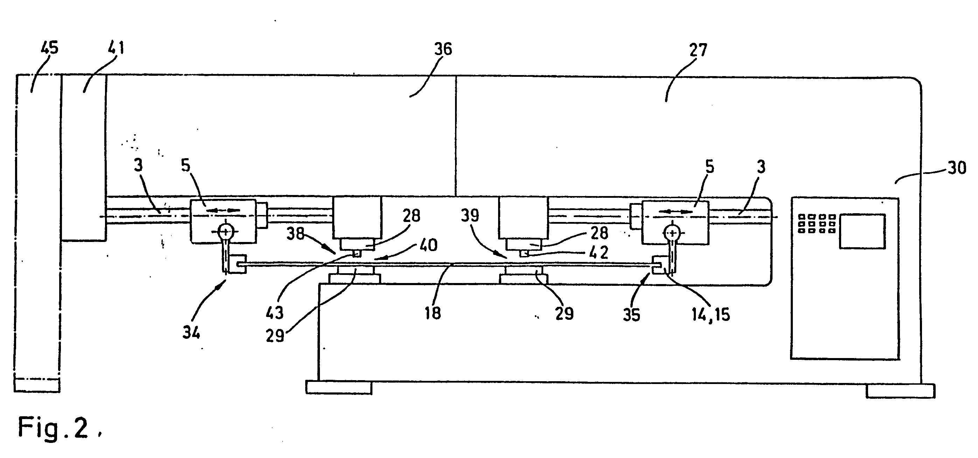

Beim Ausführungsbeispiel der Fig. 1 weisen die beiden Ausleger 26 und 27 dieser Bearbeitungsmaschine mit ihren freien Enden gegeneinander. Demgegenüber besitzt der Ausleger 27 der Bearbeitungsmaschine nach Fig. 2 eine Ausleger-Verlängerung 36. Während bei Fig. 1 die Bearbeitungsstationen 37 bzw. 38 jeweils dem Bereich des freien Auslegerendes zugeordnet sind, befinden sich die Bearbeitungsstationen 39 und 40 bei der anderen Variante im Bereich des freien Endes des Auslegers 27 einerseits und der Ausleger-Verlängerung 36 andererseits. Die Werkstück-Haltevorrichtung 34 ist auch bei der Variante nach Fig. 2 spiegelbildlich zur zusätzlichen Werkstück-Haltevorrichtung 35 des Auslegers 27 angeordnet und aus diesem Grunde ist an die Ausleger-Verlängerung 36 ein Hilfsarm 41 angesetzt. Im übrigen ist dort auch noch schematisch ein Werkzeug-Oberteil, insbesondere ein Stanzstempel 42 bzw. 43, eingezeichnet. Die beiden Bearbeitungsmaschinen jeder Variante müssen jedoch nicht notwendigerweise gleich ausgebildet sein, wie vorstehend bereits dargelegt wurde. Insbesondere kann der Hilfsarm 41 eine zusätzliche Abstützung 45 (wie strichpunktiert eingezeichnet) aufweisen.

**Patentansprüche**

1. Bearbeitungsmaschine für flache Werkstücke, mit einer Bearbeitungsstation und einer bezüglich Bearbeitungswerkzeug geraldinig (z. B. in X-Richtung) mittels einer ersten Vorschubvorrichtung (11, 12, 13) bewegbaren sowie betätigbaren ersten Werkstück-Haltevorrichtung (34) und mit einer zusätzlichen, wenigstens altenativ zur ersten mittels einer zusätzlichen Vorschubvorrichtung (7, 4, 8) in gleicher Richtung bewegbaren sowie betätigbaren Werkstück-Haltevorrichtung (35), dadurch gekennzeichnet, daß die beiden, gegenüberliegenden Werkstückrändern zuordnenbaren Werkstück-Halte- und -Vorschubvorrichtungen mittels einer gemeinsamen Steuervorrichtung (30) sowohl einzeln als auch gemeinsam innerhalb einer gemeinsamen X-Y-Ebene bewegbar und vorzugsweise auch betätigbar sind, sowie Werkstück-Koordinatenführungen mit gleichen bzw. parallelen X- und Y-Achsen angehören.

2. Maschine nach Anspruch 1, dadurch gekennzeichnet, daß die gemeinsame Steuerung (30) programmierbar ist.

3. Maschine nach Anspruch 1 oder 2, dadurch gekennzeichnet, daß die beiden Werkstück-Haltevorrichtungen (34, 35) einander mit Abstand gegenüberliegen, wobei Spannpratzen (16, 17) der ersten Werkstück-Haltevorrichtung (34) in etwa entgegengesetzte Richtung weisen, wie Spannpratzen der zusätzlichen Werkstück-Haltevorrichtung (35).

4. Maschine nach Anspruch 3, dadurch gekennzeichnet, daß der Seitenabstand der Halteorgane (14, 15) jeder Haltevorrichtung (34 bzw. 35) separat einstellbar ist.

5. Maschine nach wenigstens einem der vorhergehenden Ansprüche, dadurch gekennzeichnet, daß die beiden Werkstück-Haltevorrichtungen (34, 35) mechanisch miteinander verbunden sind.

6. Maschine nach wenigstens einem der vorhergehenden Ansprüche, gekennzeichnet durch zwei voneinander entfernte Bearbeitungsstationen (37, 38; 39 40) für das Werkstück (18).

7. Maschine nach wenigstens einem der Ansprüche 3 bis 6, dadurch gekennzeichnet, daß beiden Bearbeitungsstationen (37, 38; 39, 40) mit festem Abstand in gleicher Richtung auseinanderliegen, wie die beiden Werkstück-Haltevorrichtungen (34, 35).

8. Maschine nach Anspruch 7, dadurch gekennzeichnet, daß sich die beiden Bearbeitungsstationen (37, 38) wenigstens zum Teil an gegeneinander weisenden Maschinen-

Auslegern (26, 27) befinden.

9. Maschine nach Anspruch 7, dadurch gekennzeichnet, daß sich die zweite Bearbeitungsstation (40) wenigstens zum Teil an einer Verlängerung (36) eines Maschinen-Auslegers (27) befindet.

**Claims**

1. Processing machine for flat workpieces with a processing station and a first workpiece holding device (34) which can be moved and operated in a straight line (e.g. in the X direction) in relation to its working tool by means of a first feeding device (11, 12, 13) and with an additional workpiece holding device (35) which at least as an alternative to the first one can be moved and operated in the same direction by means of an additional feeding device (7, 4, 8), characterised in that the two workpiece holding and feeding devices which can be assigned to the two opposite workpiece edges can be moved and for preference also operated by means of a common control device (30) both individually as also jointly within a common X-Y plane as well as being associated with workpiece coordinate guides with the same or parallel X and Y axes.

2. Machine according to claim 1, characterised in that the common control (30) can be programmed.

3. Machine according to claim 1 or 2, characterised in that the two workpiece holding devices (34,35) are arranged opposite each other with a clearance, whereby clamping shoes (16,17) of the first workpiece holding device (34) point in approximately the opposite direction to clamping shoes of the additional workpiece holding device (35).

4. Machine according to claim 3, characterised in that the lateral clearance of the holding components (14, 15) of each holding device (34 or 35) can be adjusted separately.

5. Machine according to at least one of the previous claims, characterised in that the two workpiece holding devices (34, 35) are connected to each other mechanically.

6. Machine according to at least one of the previous claims, characterised by two processing stations (37, 38, 39, 40) for the workpiece (18) which are remote from each other.

7. Machine according to at least one of claims 3 to 6, characterised in that the two processing stations (37, 38, 39, 40) are positioned apart from each other with a fixed clearance in the same direction, as the two workpiece holding devices (34, 35)

8. Machine according to claim 7, characterised in that the two processing stations (37, 38) are located at least in part on machine arms (26, 27) facing each other.

9. Machine according to claim 7, characterised in that the second processing station (40) is located at least in part on an extension (36) of a machine arm (27).

**Revendications**

1. Machine pour usiner des pièces plates, comprenant un poste d'usinage et un premier dispositif (34) de retenue des pièces à usiner qui peut être mis en mouvement et actionné, au moyen d'un premier dispositif d'avance (11, 12, 13), rectilignement (par exemple dans la direction X) par rapport à l'outil d'usinage dudit poste, ainsi qu'un dispositif supplémentaire (35) de retenue des pièces à usiner qui peut être mis en mouvement et actionné au moins en alternance avec le premier dispositif, dans la même direction, au moyen d'un dispositif d'avance supplémentaire (7, 4, 8), caractérisée par le fait que les deux dispositifs de retenue et d'avance des pièces à usiner, pouvant être associés à des bords opposés desdites pièces à usiner, peuvent être mis en mouvement et de préférence également être actionnés à l'intérieur d'un plan commun X-Y, tant individuellement que conjointement, au moyen d'un dispositif commun de commande (30), et font partie de systèmes de guidage à coordonnées des pièces à usiner, dont les axes des X et des Y sont respectivement identiques ou parallèles.

2. Machine selon la revendication 1, caractérisée par le fait que la commande commune (30) est programmable.

3. Machine selon la revendication 1 ou 2, caractérisée par le fait que les deux dispositifs (34, 35) de retenue des pièces à usiner sont opposés à distance l'un de l'autre, des griffes de serrage (16, 17) du premier dispositif (34) de retenue des pièces à usiner étant sensiblement orientées en sens inverse de griffes de serrage du dispositif supplémentaire (35) de retenue des pièces à usiner.

4. Machine selon la revendication 3, caractérisée par le fait que l'espacement latéral des organes de retenue (14, 15) de chaque dispositif de retenue (34 ou 35, respectivement) est réglable séparément.

5. Machine selon au moins l'une des revendications précédentes, caractérisée par le fait que les deux dispositifs (34, 35) de retenue des pièces à usiner sont reliés l'un à l'autre mécaniquement.

6. Machine selon au moins l'une des revendications précédentes, caractérisée par deux postes (37, 38, 39, 40) éloignés l'un de l'autre, destinés à la pièce à usiner (18).

7. Machine selon au moins l'une des revendications 3 à 6, caractérisée par le fait que les deux postes d'usinage (37, 38 ; 39, 40) sont opposés l'un à l'autre, avec espacement fixe, dans la même direction que les deux dispositifs (34, 35) de retenue des pièces à usiner.

8. Machine selon la revendication 7, caractérisée par le fait que les deux postes d'usinage (37, 38) se trouvent, au moins en partie, sur des avancées en porte-à-faux (26, 27) de la machine, orientées l'une vers l'autre.

9. Machine selon la revendication 7, caractérisée par le fait que le second poste d'usinage (40) se trouve, au moins en partie, sur un prolongement (36) d'une avancée en porte-à-faux (27) de la machine.

Fig.1

Fig.2.

0 123 183